# EUROPEAN PATENT SPECIFICATION

(11) **EP 3 882 143 B1**
(45) Date of publication and mention of the grant of the patent: **23.08.2023**
(21) Application number: 20164235.2
(22) Date of filing: 19.03.2020
(51) Int. Cl.: B64U 10/13, B66D 1/28, B66D 5/32

(54) **AERIAL DRONE REEL DEVICE AND METHOD FOR USING THE SAME**
LUFTDROHNENSPULENVORRICHTUNG UND VERFAHREN ZUR VERWENDUNG DAVON
DISPOSITIF DE BOBINE DE DRONE AÉRIEN ET SON PROCÉDÉ D'UTILISATION

(43) Date of publication of application: 22.09.2021
(73) Proprietor: Everdrone AB, 423 73 Säve (SE)
(72) Inventor: GRANBERG, Emil, 423 38 TORLANDA (SE)
(74) Representative: AWA Sweden AB

(56) References cited:
- EP-A1- 3 070 045
- CN-A- 110 304 564
- CN-U- 209 988 121
- US-A1- 2015 183 615
- US-B1- 10 017 353

## Description

### TECHNICAL FIELD OF THE INVENTION

The present disclosure relates to an aerial drone reel device and an aerial drone reel system for lowering a payload from an aerial drone. The present invention also relates to a method of using the drone reel device and drone reel system.

### BACKGROUND

Airborne drones are known to be used for delivery of supplies or packages. The benefit of using drones for delivery lies in the versatility and speed of modern drones which can carry packages straight from a start location to a delivery location. Using relatively small airborne vehicles furthermore allows the delivery location to be much more arbitrarily chosen by the receiving party. An aerial drone delivery location could for instance be a window sill or a roof top, places that are traditionally inaccessible for conventional package delivery.

A problem with drone delivery lies in the safety of dropping or leaving the package that is to be delivered at the designated location. Especially if the delivery location lies within a populated area it could be dangerous to simply drop the package from a high altitude. Furthermore, landing with the aerial drone before releasing the package might also pose a danger for nearby individuals and such an operation might not even be possible due to surrounding obstructions, such as buildings or vegetation.

To this end it has been proposed that drones may utilize a drum and tether solution to winch down a package. For example, in US9969494 it is disclosed that a drum and brake may be used to lower a package with a tether spooled around the drum, whereby the tether slips off the drum when fully extended to release the package. Additionally, in US9957046, it is described that the rate at which a winch lets out a line may be varied via a controllable brake (e.g. a magnetic brake), which is configured to apply a variable amount of friction to the line.

These solutions need control systems and steerable brakes to facilitate proper package delivery by winching. Consequently, such solutions tend to be sluggish, difficult to control and could occasionally cause a danger for people in the vicinity of the delivery location.

CN110304564A discloses a cargo lifting device for an aircraft. The cargo lifting device comprises a first driving mechanism, a first locking structure, a second locking structure, a second driving mechanism and a buffer mechanism, wherein the first driving mechanism is used for driving a winding drum to rotate, the first locking structure is used for locking the winding drum and the first driving mechanism, the second locking structure is used for limiting the rotation of the winding drum, the second driving mechanism is used for switching the locking states of the first locking structure and the second locking structure, and the buffer mechanism is used for providing buffering when the second locking structure limits rotation of the winding drum.

US10017353B1 discloses an electrical cable reel module for a drone includes a bracket adapted to be firmly fixed to the drone. A reel body is movably and rotatably mounted on the bracket. A first driving device is mounted on one side of the bracket to drive the reel body to rotate and a second driving device is mounted on the other side of the bracket to drive the reel body to move linearly in a first direction. A third driving device is mounted on the bracket to drive the reel body to move linearly in a second direction opposite to that of the first direction. At least one positioning device is mounted among the reel body, the first driving device and the second driving device to selectively drive the reel body to rotate and prevent the reel body from movement and rotation.

### SUMMARY OF THE INVENTION

The inventors have realized that there is a desire to descend the payload quickly in order to alleviate problems with wind affecting the delivery position of the payload. The slower the descend is done, the more the wind will affect the delivery position. Further, there faster the descend can be made, the faster the delivery can be made, which can be important in some deliveries. However, there is simultaneously an opposing desire to descend the payload slowly once the payload is approaching the ground, so as to minimize risk for people at the delivery zone and also decrease risk of damaging the package.

In view of the shortcomings of the solutions discussed in the above, and the inventors' insights on descend speed above, there is a need for a more fail safe and faster way of performing drone delivery.

It is an object of the present invention to provide an improved device, system and method for safely and rapidly winching down a tether from an airborne drone, wherein the tether may be adapted to lower a payload.

The invention is defined by the appended independent claims, with embodiments being set forth in the appended dependent claims, in the following description, and in the drawings.

According to a first aspect of the inventive concept, there is provided an aerial drone reel device comprising:
an aerial drone fixating portion,
a reel body arranged along a rotational axis, wherein said reel body is rotatably attached to said aerial drone fixating portion, wherein said reel body comprises:
   a first winding segment for providing a first winding lever distance to said rotational axis,
   a second winding segment providing a second winding lever distance to said rotational axis,
   wherein
   said first and second winding segment is adapted to wind a tether at said first and second winding lever distance respectively, and wherein said first winding lever distance is larger than said second winding lever distance.

The present invention is at least partly based on the understanding that a reel body comprising at least two winding segments with respectively different winding lever distances introduces different inherent unwinding/descent rates for a tether unwinding from each segment. The aerial drone reel device introduces an inherent braking property without the need for additional braking means or electrical control equipment. A larger winding lever distance will introduce a larger torque around the rotational axis and a smaller winding lever distance will introduce a smaller torque around the rotational axis. Thus, by unwinding a tether from a winding segment with a larger winding lever distance the tether will descend rapidly as the associated torque is large. Alternatively, by unwinding the tether from a winding segment with a smaller winding lever distance, the associated torque is smaller, and the tether will descend more slowly. Preferably, the tether may be wound such that the tether initially descends rapidly from a drone hovering at a certain altitude (is unwound from a segment with a large winding lever distance) and then descends slowly (is unwound from a segment with a small winding lever distance) as the tether approaches the ground. The aerial drone reel device accomplishes rapid unwinding/descent of the tether while also featuring an inherent braking capability that may make the descent of the tether to slow down before reaching the ground. The aerial drone reel device thus provides both a faster and a more fail-safe way of lowering a tether. With the aerial drone reel device, the tether descent speed profile may be essentially a step profile, e.g. initially fast and subsequently slower.

According to the first aspect of the invention, at least one of said first and second winding segment has a width of at least two times a thickness of said tether, and the winding lever distance is kept constant for a given winding segment.

With a width of at least two times a thickness of the tether it is understood that a winding segment may allow at least two complete rotational tether windings (720°) around itself. With winding segments featuring a width of at least two times of a thickness of the tether the aerial drone reel device allows facilitated design to suit any tether lowering application. With at least two complete rotational windings a portion of a tether is wound with essentially the same winding lever distance. Some unwinding properties, such as the winding lever distance, may be kept constant for a given winding segment if two or more windings are allowed by a wide enough winding segment. As an example, if a first winding lever distance (and an associated first tether decent speed) is required for a first portion of a tether and a second winding lever distance (and an associated second tether decent speed) is required for a second portion of that tether the width of the winding segments may easily be determined from the thickness of the cable and the length of respective portions. The tether may additionally and/or alternatively be wound in multiple layers around at least one winding segment.

In some embodiments, there is provided an aerial drone reel device according to the first aspect of the invention, wherein said at least one of said first and second winding segment which has a width of at least two times a thickness of said tether has a width of at least five or ten times the thickness of said tether.

With wider winding segments a longer portion of the tether may be wound at a constant winding lever distance. Alternatively, at least one of the first and second winding segment may have a width of at least fifteen or twenty times a thickness of the tether.

According to the first aspect of the invention, a first portion of said tether is wound around said first winding segment and a second portion of said tether is wound around said second winding segment.

By winding a portion of a tether first around a first winding segment and a second portion of that tether around a second winding segment the tether unwinding may automatically change from a first winding lever distance to a second winding lever distance. In this way the tether may descend rapidly as it is unwound with a first winding lever distance (and a high torque around the rotational axis) and descend more slowly as it is unwound with a second winding lever distance (and a low torque around the rotational axis). As an example, the tether may initially descend rapidly from an aerial drone hovering above the ground and then descend more slowly as it is approaching the ground.

In some embodiments, there is provided an aerial drone reel device according to the first aspect of the invention, wherein an end of said tether is adapted to lower a payload.

With a tether adapted to lower a payload any item or plurality of items may be safely and rapidly lowered by the aerial drone reel device and the tether. The tether may further be adapted to be fastened to the payload. The payload may be directly fastened to the tether. Alternatively, the payload may be indirectly fastened to the tether. A payload indirectly fastened to the tether may comprise a delivery case attached to the tether, wherein the payload is housed inside the delivery case. The delivery case may be openable to extract the payload. The delivery case may be configured to automatically open to release the payload. The delivery case may alternatively be a delivery net in which the payload is housed. The payload may comprise any item or number of items, including emergency medical supplies such as an AED or epi-pen. Delivering any emergency medical supplies may be beneficial by means of aerial drones, since emergency deliveries may be made faster when avoiding traffic etc.

In some embodiments, there is provided an aerial drone reel device according to the first aspect of the invention, wherein the weight of said payload is between about 0.1 kg to 50 kg, or preferably between about 0.1 kg to 10 kg, or most preferably 0.1 kg to 5 kg.

An aerial drone may be sized to carry large loads, but the best cost/benefit proportions are obtained for products being in the above-mentioned range of weights. This allows for flexible transportations with drones of reasonable sizes, e.g. measuring less than 3 meters in cross-sectional distance between wing-tips, preferably below 2 meters in cross-sectional distance between wing-tips and preferably below 1,5 meters in cross-sectional distance between wing-tips..

In some embodiments, there is provided an aerial drone reel device according to the first aspect of the invention further comprising a locking mechanism, wherein said locking mechanism in a locked state hinders said reel body from rotating relative said aerial drone fixating portion and wherein said locking mechanism in an unlocked state allows said reel body to rotate relative said aerial drone fixating portion.

Hence it can be determined when and/or where the reel body of the aerial drone reel device should be locked or unlocked from rotating around the rotation axis. For instance, the reel body may be locked from rotation when the aerial drone is in transit from a start location to a delivery location. The reel body may be unlocked to allow rotation as the aerial drone is hovering above the delivery location. Additionally, or alternatively the reel body may be unlocked to allow rotation once the aerial drone reaches a pre-determined delivery altitude. A locking mechanism will enhance safety as it may allow the tether to descend only in situations where decent is deemed safe.

In some embodiments there is provided an aerial drone reel device according to the first aspect of the invention, wherein at least one of said reel body, said first winding segment, and said second winding segment, further comprises a circumferentially protruding rim.

The rim may be used for separating a wound tether between the winding segments. The rim may hinder the windings from slipping of their respective winding segment. Additionally, and/or alternatively, the tether may be wound over itself so as to hinder the windings from slipping. For example, windings around the first winding segment may potentially slip over to the second winding segment without a separating rim. The rim may be provided with slots or slits to facilitate winding of a tether from a winding segment to another winding segment. The rim may be comprised in either the first or second winding segment or the reel body. If comprised in the reel body the rim may be arranged between the first and second winding segment or arranged right next to only the first or second winding segment.

According to a second aspect of the inventive concept, there is provided
an aerial drone reel system comprising the aerial drone reel device according to the first aspect of the invention, wherein said system further comprises:
a braking means coupled to said reel body, and wherein
said braking means is configured to in a braking state brake the rotation of said reel body.

This aspect features the further feature of providing additional braking of the rotation of the reel body with braking means. The braking means could be any type of mechanical, magnetic or electronic braking means. In one embodiment the braking means is an electrical generator. Depending on the application additional braking may be needed besides the inherent braking properties of the aerial drone reel device. The braking force introduced by the generator may be constant or varying with the rotation rate of the reel body to which the generator is coupled. In a braking state the generator circuit is closed, and the generated current is dissipated in a load.

There is no need for precision control or steering of the brake force applied to the reel body to form a descent speed profile wherein the tether and payload, should it be directly or indirectly attached to the tether, slows down before reaching the ground, as this is inherently provided by the aerial drone reel device as such. The aerial drone reel device must rotate at a much higher angular velocity for the same tether descent speed when unwinding from the second winding segment compared to the first winding segment. A generator in a braking state, or equivalently any friction based braking means, will force the tether to descend more slowly without any change of state.

A simple generator suffices or, alternatively, any equivalent braking means can be utilized in embodiments of the inventive concept. With the generator or braking means in the braking state per default the aerial drone reel system is more fail safe as any tether descent will be braked by the generator.

In some embodiments there is provided an aerial drone reel system according to the second aspect of the invention wherein said braking means is further configured to in a non-braking state allow said reel body to rotate freely relative said braking means.

Thus, the generator may operate in non-braking state wherein the reel body may rotate without, or substantially without, any braking influence of the generator. Entering the non-braking generator state means that the system may operate in a state in which the main cause of rotation braking is caused by the inherent properties of the aerial drone reel device and its coupling to the aerial drone fixating portion.

The generator may enter the non-braking state to allow faster unwinding of a tether. In the non-braking state, the generator circuit may be open, resulting in no generated current being dissipated in the load. A person skilled in the art appreciates that providing an open or closed generator circuit may be accomplished with e.g. an electrical relay, switch, transistor or similar means adapted to at least substantially break or short the connection between two terminals. The generator may be toggled between the braking and non-braking state arbitrarily. For example, by closing (braking) or opening (non-braking) the generator circuit.

According to a third aspect of the inventive concept, there is provided an aerial drone comprising an aerial drone reel device according to the first aspect of the invention or comprising an aerial drone reel system according to the second aspect of the invention.

According to a fourth aspect of the inventive concept, there is provided a method for lowering a tether from an aerial drone, wherein said tether is adapted to lower a payload, comprising an aerial drone reel device, wherein said method comprises the steps of:
unwinding said tether from a first winding segment by rotating said first winding segment with a first torque relative a reel body,
unwinding said tether from a second winding segment by rotating said second winding segment with a second torque relative said reel body,
wherein said first and second torque is caused by a tension in said tether and a first and second winding lever distance to a rotational axis of the reel device, and wherein at least one of said first and second winding segment has a width of at least two times a thickness of said tether and the winding lever distance is kept constant for a given winding segment.

This method provides a safe and fast procedure for lowering a tether. The larger first winding lever distance will result in the tether unwinding/ descending rapidly and the smaller second winding lever distance will result in the tether unwinding/descending more slowly. In other words, the tether may unwind/descend at a rapid rate initially and a slower rate as it transitions to the second winding segment. The transition to the second winding segment may coincide with an end of the tether approaching the ground, or a pre-determined distance from the ground. The tension in the cable may be caused by the weight of the payload and the tether. The tension in the cable may be only caused by the weight of the tether itself.

The method may be carried out with an areal drone reel device according to any one of the above described embodiments.

In some embodiments of the fourth aspect of the invention there is provided a method for lowering a payload attached to a tether from an aerial drone according to other embodiments of the fourt aspect of the invention, wherein said method further comprises the step of:
braking the rotation of said reel body with braking means in a braking state coupled to said reel body.

Thus, the unwinding/descent of the tether may be subject to additional braking forces, applied by the braking means, besides the inherent braking properties of the aerial drone reel device as such. The braking means may be a generator according to other embodiments of the invention.

In some embodiments of the fourth aspect of the invention there is provided a method for lowering a payload attached to a tether from an aerial drone according to other embodiments of the fourt aspect of the invention, wherein said method further comprises the steps of:
not braking the rotation of said reel body with braking means in a non-braking state coupled to said reel body.

By not braking the rotation of the reel body the tether may at such times be unwound more easily and rapidly from the reel body as compared to times when the braking means is in the braking state. The braking means may be a generator according to other embodiments of the invention.

In some embodiments of the fourth aspect of the invention there is provided a method for lowering a payload attached to a tether from an aerial drone according to other embodiments of the fourt aspect of the invention, wherein said method further comprises, as a final step either:
increasing the altitude of said aerial drone until said tether unwinds completely from said first and/or second winding segment, or
winding up said tehter with a generator, wherein said generator acts as an electic motor.

Increasing the altitude of the aerial drone may be referred to as a blow-off manoeuvre. Wherein the blow-off manoeuvre may include rapidly increasing the altitude of drone so as to, for example, unwind a remaining portion of a tether. The blow-off manoeuvre may start automatically after a pre-determined time has elapsed since the locking mechanism switched from the locked to the unlocked state. The blow-off manoeuvre may preferably be combined with the generator in the non-braking state, wherein the torque required to rotate the reel body is lower compared to the generator operating in the braking state. Operating the generator in the non-braking state may ensure that increasing the altitude of the aerial drone does not tug or drag the tether along. By performing this action, the tether may be completely unwound quickly. Thus, the tether may be completely freed from the aerial drone. With the blow-off manoeuvre the tether may be completely unwound from the aerial drone faster compared to it unwinding completely of its own volition, with the aerial drone hovering at a constant altitude.

Alternatively, the generator may be configured to in a wind-up state wind up the tether around the reel body. By providing current from a current source provided in the aerial drone reel device, drone reel system or drone to the generator circuit in such a way that the generator acts as an electric motor, the tether may be wound up around the reel body. Acting as an electric motor in the wind-up state the generator supplies a torque on the reel body such that the tether is wound up the reel body. The tether may be wound up while still being attached to the payload, or the payload may be adapted to automatically or manually come lose from the tether whereby the tether is wound up. The payload may be indirectly fastened to the tether as described in the above, wherein the delivery case is wound up with the tether after having automatically or manually released the payload. The braking means may be a generator according to other embodiments of the invention. The generator for braking may be the same as the generator used for winding up.

It should be understood that anyone of the above-mentioned embodiments may be combined in any way.

### BRIEF DESCRIPTION OF THE DRAWINGS

These and other aspects of the present invention will now be described in more detail, with reference to the appended drawings showing exemplary embodiments of the present invention, wherein:
Fig. 1 is a schematic isometric perspective view of an aerial drone reel device incorporating at least one aspect of the invention.
Fig. 2 is a schematic perspective view of an aerial drone reel device with a tether and payload according to embodiments of the invention.
Fig. 3 is a cross-sectional top view of an aerial drone reel device incorporating at least one aspect of the invention.
Fig. 4 is a cross-sectional view of an aerial drone reel system according to embodiments of the invention.
Fig. 5 illustrates an aerial drone with the aerial drone reel system and a payload according to an aspect of the invention.
Fig. 6 illustrates an aerial drone with the aerial drone reel system, a tether and a payload according to some embodiments of the invention.
Fig. 7 is a flow chart of a method according to one or more embodiments of the invention.

### DETAILED DESCRIPTION

In the following detailed description, some embodiments of the present invention will be described. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

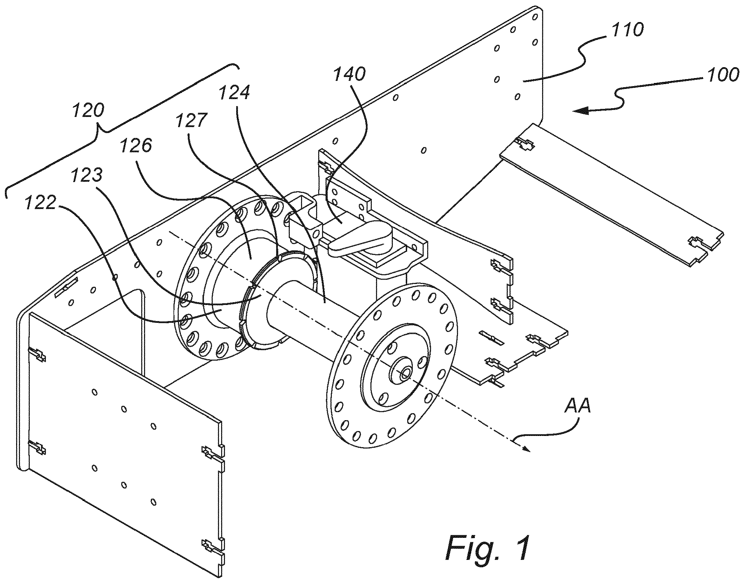

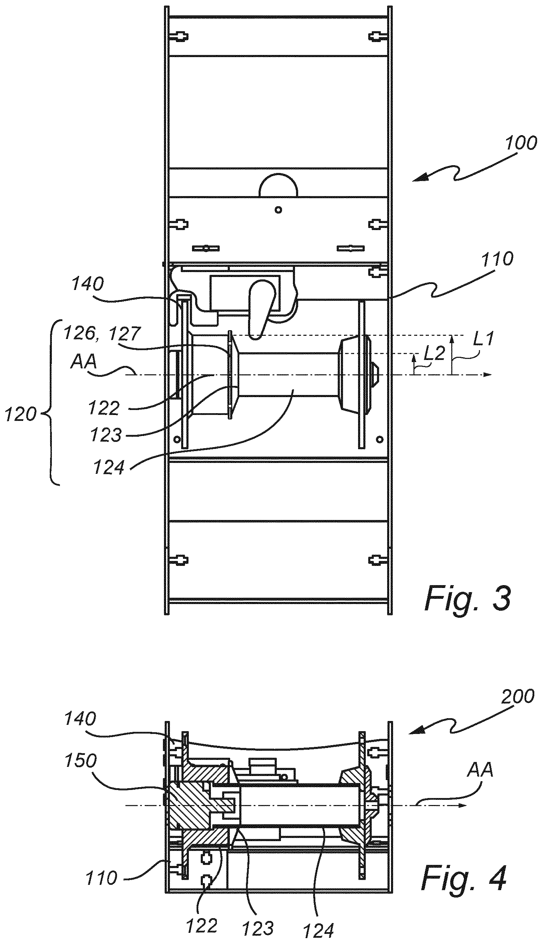

With reference to Fig. 1 and Fig. 3 there is illustrated an exemplary embodiment of an aerial drone reel device (100). The aerial drone reel device (100) comprises an aerial drone fixating portion (110) adapted to be fixated to an aerial drone. The aerial drone reel device (100) further comprises a reel body (120) rotatably attached to the aerial drone fixating portion (110). The reel body (120) is arranged along, and configured to rotate around, the rotational axis (AA). The reel body (120) of the aerial drone reel device (100) further comprises a first and second winding segment (122, 124) featuring a first and second winding lever distance (L1, L2) respectively. The winding lever distance (L1, L2) is the distance between rotational axis (AA) and the outer surface of a winding segment (122, 124) which is adapted to wind a tether. The torque around the rotational axis (AA) is the product between the winding lever distance (L1, L2) and the component of a supplied force that is perpendicular to the rotational axis (AA). The force may be resulting from a tension in a tether wound around a winding segment (122, 124).

The reel body (120) may further comprise an intermediate winding segment (123) and a circumferentially protruding rim (126). Wherein the rim is provided with slots or slits (127).

The aerial drone reel body may further comprise an intermediate winding segment (123) located between said first and second winding segments (122, 124). The said intermediate winding segment (123) may feature a first winding lever distance (L1) from said rotational axis (AA) at a first end adjoining a first winding segment (122), and the intermediate winding segment (123) may feature a second winding lever distance (L2) from the rotational axis (AA) at a second end adjoining the second winding segment (124). An intermediate winding segment may allow facilitated construction of the reel body as it may allow a separating segment between the first and second winding segments. An intermediate winding segment may further provide better winding properties in the case a tether is wound around both winding segments. An intermediate portion of the tether may then be wound around the intermediate winding segment.

The intermediate segment (123) may be tapered or any other shape featuring that the corresponding winding lever distance at its respective sides matches the first and second winding segment. With a matching winding lever distance, a tether may smoothly transition from winding/unwinding around a first or second winding segment to winding/unwinding from a to another winding segment.

The aerial drone reel device may further comprise a locking mechanism (140). The locking mechanism (140) may be in the form of a servo or actuator. In a locked state the locking mechanism (140) locks the reel body (120) from rotating around the rotational axis (AA) relative the aerial drone fixating portion (110). In an unlocked state the locking mechanism (140) allows the reel body (120) to rotate around the rotational axis (AA) relative the aerial drone fixating portion (110). Locking the reel body (120) from rotation with a locking mechanism (140) may comprise inserting a pin into a hole adapted to receive the pin provided on the reel body (120). Equivalently, unlocking the reel body (120) from rotation relative the aerial drone fixating portion (110) may comprise extracting the pin from the hole provided on the reel body (120). The insertion and/or extraction of the pin may be provided by the servo or actuator.

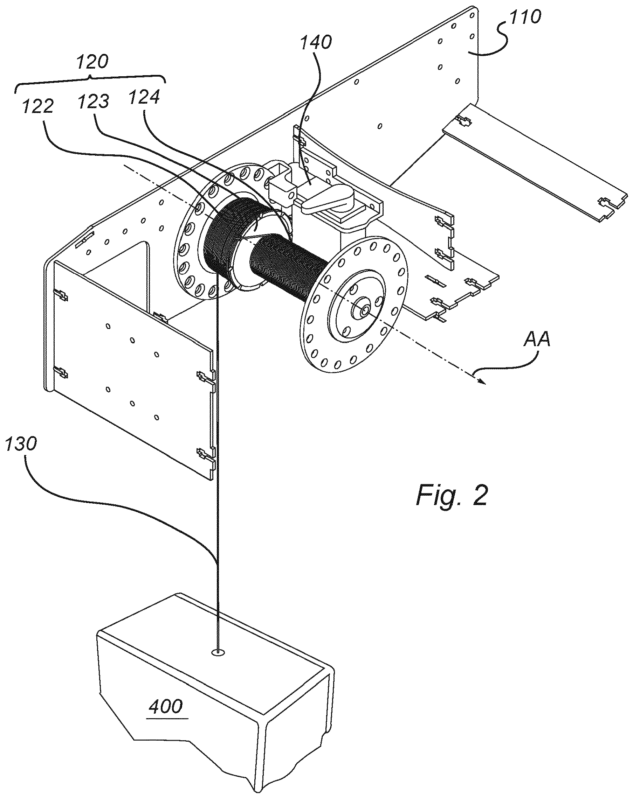

With further reference to Fig. 2 there is provided an aerial drone reel device having a tether (130) wound first around a first winding segment (122), around an intermediate winding segment (123), and wound around a second winding segment (124).

In a preferred embodiment, the tether may first be wound around the second winding segment (124), then around the intermediate winding segment (123) and lastly around the first windings segment (122). Such that when the tether is unwound it is first unwound from the first winding segment (122), then the intermediate winding segment (123) and lastly the second winding segment (122). The same winding/unwinding order applies to embodiments without the intermediate winding segment.

The winding segments (122, 123, 124) have a width of at least two times a thickness of the tether (130), thereby being adapted to wind at least two windings of a tether (130) with a certain thickness. At least one of the winding segments (122, 123, 124) may further be adapted to wind more than one layer of tether (130), meaning that the tether (130) may be stacked on itself around a winding segment (122, 123, 124).

The presentation of a reel body in the embodiments shown in the drawings, with only two winding segments (122, 124), is merely exemplary and the inventive concept includes embodiments with any integer number of winding segments (122, 124), along with potential intermediate winding segments (123). Such embodiments could satisfy an arbitrary preferred tether unwinding/descent speed profile with multiple different winding lever distances and the associated resulting torques around the rotational axis.

One end of the tether (130) may be indirectly or directly fastened to a payload (400).

The total length of the tether (130) may be equal to a pre-determined delivery altitude plus a margin length. The pre-determined delivery altitude may be 150 m or less, or about between 3 m and 100 m, or about between 10 m and 50 m.

A first portion of the tehter (130) is for winding/unwinding from the first winding segment (122), a second portion of the tether (130) is for winding/unwidning from the second winding segment (124). The tether may further comprise an intermediate portion separating the first and second tether portion, to allow winding/unwinding between the first and second winding segments (122, 124). The length of the first, second and intermediate tether portion together make up at least a part of the pre-determined delivery altitude.

The margin length may be zero. Alternativley, the margin length may be any non-zero length. Preferably, the margin length is some non-zero length and at least a portion of the margin portion of the tether is wound around said second wining segment (124). The margin length may provide more fail safe operation, if the pre-determined delivery altitude cannot be precisley reached, the margin length wound around the second winding segment will make sure that the smaller torque acts on the reel device even as the first, intermediate, and second tether portion has been unwound and the margin portion is being unwound.

The portions of the tether are mainly to be interpreted as functional naming of the different portions. The tether may for example be a single continous and uniform thether in all its portions, and the difference with the different portions is how the different portions are used (winded on firs/second/intermediate segment and/or as margin length). In other emobidments, the different portions may be marked differently (e.g. with colors or structure), the can also be of different diameter or materials resulting in different weights per meter.

Fig. 4 illustrates a cross-sectional view of an aerial drone reel system (200) comprising the aerial drone reel device alongside a braking means in this embodiment illustrated as an electrical generator (150). In the embodiment shown in Fig. 4 the generator (150) is in part encompassed within the reel body which provides for a compact design of the system. However, embodiments with the braking means/generator provided outside of the reel body are possible within the scope of the inventive concept. The generator (150) may, in a braking state, brake the rotation of the winding segments (122, 123, 124) of the reel body.

The tether may be unwound from the reel body by its own weight and the weight of the payload. Should no payload be present the weight of the tether itself may be sufficient to unwind the tether.

The payload and tether may descend at substantially free-fall velocity as the tether is unwound from the first winding segment (122). This may hold for both the aerial drone reel device (with no generator) and the reel system with a coupled generator (150) in the braking state. If the difference between the winding lever distances of the winding segments is large enough it may be that the descent rate for the tether (and payload should it be present) does not deviate substantially from free-fall velocity until the tether starts to unwind from the segment with the smaller winding lever distance.

It should further be noted that the braking provided by the generator is provided as a complement to the inherent braking provided by the reel body, which preferably has a non-zero moment of inertia. The descent speed of a tether (and a payload should it be present) depends on the balance between the tension in the tether together with the winding lever distance and the torque required to keep the reel body rotating at a certain rotational velocity. As the tether transitions from a larger winding lever distance to a smaller winding lever distance the descent of the tether will slow down as a higher rotational velocity of the reel body is necessary. A higher rotational velocity of the reel body means an increase in angular kinetic energy, which takes some time to build up of the reel body. Thus, by only transitioning from a larger winding lever distance to a smaller winding lever distance the descent speed will decrease without external braking.

Furthermore, any physical object rotationally attached will introduce energy losses due to non-zero friction, rotating the same reel body at a higher rotational velocity will introduce greater losses. Thus, the steady-state descent speed will inherently be lower for unwinding the tether from segment with a smaller winding lever distance compared to unwinding the tether from a segment with a larger winding lever distance.

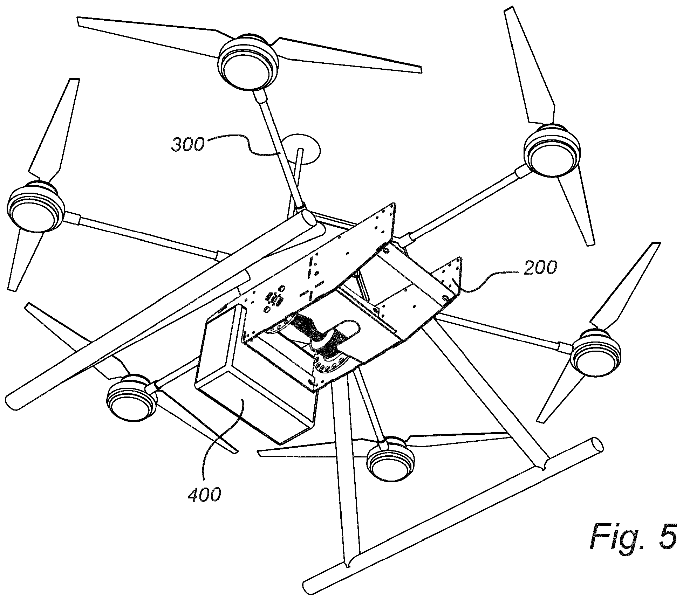

Fig. 5 shows an aerial drone (300) with the aerial drone reel system (200) and a payload (400). The aerial drone reel system (200) is attached to the aerial drone via the aerial drone fixating portion and the payload is indirectly or directly attached to an end of the tether (400). If the locking mechanism is in its locked state, the tether nor the payload (400) directly or indirectly attached to an end of the tether will preferably not unwind and descend.

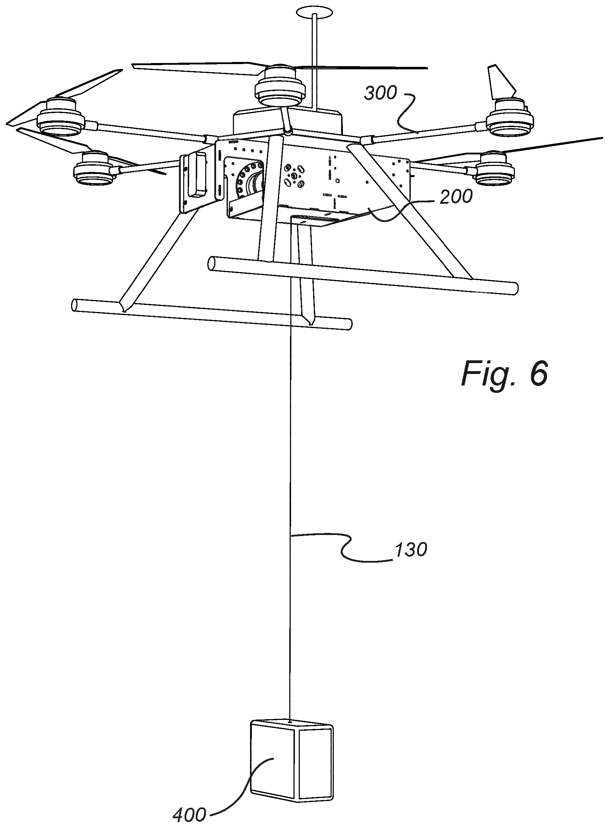

Fig. 6 shows an aerial drone (300) with the aerial drone reel system (200) as a payload (400) which is indirectly or directly attached to the tether (130) is being lowered. The aerial drone (300) may stay hovering at substantially the same altitude during the lowering of the tether (130) and the payload (400).

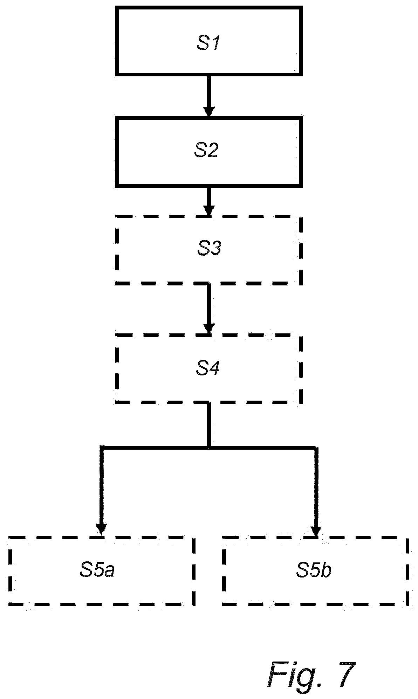

Fig. 7 represents a flow chart of a method according to an aspect of the invention. In some embodiments, an aerial drone may reach its target delivery location and enter a stable hovering state at a pre-determined delivery altitude with the locking mechanism in its locked state. Being in a stable hovering state at a target delivery location and pre-determined delivery altitude the locking mechanism may change to its unlocked state.

At S1 the tether unwinds from a first winding segment. A payload, should it be directly or indirectly attached to the tether will descend with the tether as the tether is unwound by rotating the reel body with a torque associated with the first winding lever distance. As a first portion of the tether is completely unwound from the first winding segment the method goes to S2 where the tether unwinds from a second winding segment. A payload, should it be directly or indirectly attached to the tether will descend with the tether as the tether is unwound by rotating the reel body with a torque associated with the second winding lever distance.

In some embodiments the method further comprises the optional step S3 of braking the descent and unwinding of the tether with a braking means. The braking may be magnetical, electrical or mechanical braking. Further, as described above, a generator may be used for braking the unwinding of the tether.

Some embodiments of the method further comprise the optional step S4 wherein the braking means may be toggled to a non-braking state to allow the reel body to rotate more freely relative the aerial drone fixating portion. Preferably, the braking means is toggled to its non-braking state when it is deemed that the tether and payload (should it be directly or indirectly attached to the tether) has reached the ground. As an example, the tether and payload may be deemed to have reached the ground when a pre-determined time has passed since the tether started to unwind from the reel body. This pre-determined time may depend on the pre-determined delivery altitude, the weight of the payload, the properties of the tether and/or the ratio between how long the first and second portions of the tether are. In other examples, there may be a sensor for sensing a difference in load, indicating that the payload has landed on the ground. The load may be determined from the amount of power/current supplied to the rotor motors of the aerial drone. If the aerial drone is hovering a substantially constant altitude while lowering a payload, and the payload reaches the ground, the power/current required to keep the drone hovering will decrease. Such a power/current decrease may be sensed by the sensor, indicating that the payload has reached the ground.

In some embodiments, when a tether and payload (should it be directly or indirectly attached to the tether) is deemed to have reached the ground and the generator may be set to its non-braking state according to optional step S4. The method may go to optional step S5a after step S4. At S5a the altitude of the aerial drone is increased until the tether unwinds completely from the reel body. The tether and payload are thus completely freed from the reel body and the aerial drone. The part of the tether not yet on the ground may fall freely to the ground.

As an alternative to optional step S5a, some embodiments feature optional step S5b wherein the generator is set to a wind-up state and the tether is wound up around the aerial drone reel body. In some embodiments step S5b may follow S3 without passing step S4.

The skilled person in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An aerial drone reel device (100) comprising:
an aerial drone fixating portion (110),
a reel body (120) arranged along a rotational axis (AA), wherein said reel body (120) is rotatably attached to said aerial drone fixating portion (110), wherein said reel body (120) comprises:
a first winding segment (122) for providing a first winding lever distance (L1) to said rotational axis (AA),
a second winding segment (124) providing a second winding lever distance (L2) to said rotational axis (AA),
wherein
said first and second winding segment (122, 124) is adapted to wind a tether (130) at said first and second winding lever distance respectively, and wherein said first winding lever distance (L1) is larger than said second winding lever distance (L2),
wherein a first portion of said tether (130) is wound around said first winding segment (122) and a second portion of said tether (130) is wound around said second winding segment (124), **characterized in that** at least one of said first and second winding segment (122, 124) has a width of at least two times a thickness of said tether (130) and the winding lever distance is kept constant for a given winding segment.

2. An aerial drone reel device according to claim 1, wherein said at least one of said first and second winding segment (122, 124) which has a width of at least two times a thickness of said tether (130) has a width of at least five or ten times the thickness of said tether (130).

3. An aerial drone reel device according to any of the preceding claims, wherein an end of said tether (130) is adapted to lower a payload (400).

4. An aerial drone reel device according to claim 3, wherein the weight of said payload (400) is between about 0.1 kg to 50 kg, or preferably between about 0.1 kg to 10 kg, or most preferably 0.1 kg to 5 kg.

5. An aerial drone reel device according to any of the preceding claims, further comprising a locking mechanism (140), wherein said locking mechanism (140) in a locked state hinders said reel body (120) from rotating relative said aerial drone fixating portion (110) and wherein said locking mechanism (140) in a unlocked state allows said reel body (120) to rotate relative said aerial drone fixating portion (110).

6. An aerial drone reel device according to any of the preceding claims, wherein at least one of said reel body (120), said first winding segment (122), and said second winding segment (124), further comprises a circumferentially protruding rim (126).

7. An aerial drone reel system (200) comprising the aerial drone reel device according to any of the preceding claims, wherein said system further comprises:
a braking means (150) coupled to said reel body (120), and wherein
said braking means (150) is configured to in a braking state brake the rotation of said reel body (120).

8. An aerial drone reel system according to claim 7, wherein said braking means (150) is further configured to in a non-braking state allow said reel body (120) to rotate freely relative said braking means (150).

9. An aerial drone (300) comprising an aerial drone reel device according to any one of claims 1-6 or comprising an aerial drone reel system according to any one of claims 7 to 8.

10. A method for lowering a tether (130) from an aerial drone (300), wherein said tether (130) is adapted to lower a payload (400), comprising an aerial drone reel device, wherein said method comprises the steps of:
unwinding (S1) said tether (130) from a first winding segment (122) by rotating said first winding segment (122) with a first torque relative a reel body (120),
unwinding (S2) said tether (130) from a second winding segment (124) by rotating said second winding segment (124) with a second torque relative said reel body (120),
wherein said first and second torque is caused by a tension in said tether (130) and a first and second winding lever distance (L1, L2) to a rotational axis (AA) of the reel device, **characterized by** at least one of said first and second winding segment (122, 124) has a width of at least two times a thickness of said tether (130) and the winding lever distance is kept constant for a given winding segment.

11. A method for lowering a payload (400) attached to a tether (130) from an aerial drone (300) according to claim 10, wherein said method further comprises the step of:
braking (S3) the rotation of said reel body (120) with braking means (150) in a braking state coupled to said reel body (120).

12. A method for lowering a payload (400) attached to a tether (130) from an aerial drone (300) according to claim 11, wherein said method further comprises the subsequent steps of:
not braking (S3) the rotation of said reel body (120) with braking means (150) in a non-braking state coupled to said reel body (120).

13. A method for lowering a payload (400) attached to a tether (130) from an aerial drone (300) according to any of claims 10 to 12, wherein said method further comprises, as a final step either:
increasing (S5a) the altitude of said aerial drone (300) until said tether (130) unwinds completely from said first and/or second winding segment (122, 124), or
winding (S5b) up said tehter with a generator, wherein said generator acts as an electic motor.

## Patentansprüche

1. Luftdrohnenspulenvorrichtung (100), Folgendes umfassend:
einen Luftdrohnenbefestigungsabschnitt (110),
einen Spulenkörper (120), welcher entlang einer Rotationsachse (AA) angeordnet ist, wobei der Spulenkörper (120) drehbar an dem Luftdrohnenbefestigungsabschnitt (110) befestigt ist, wobei der Spulenkörper (120) Folgendes umfasst:
ein erstes Wicklungssegment (122) zum Bereitstellen eines ersten Wicklungshebelabstands (L1) zu der Rotationsachse (AA),
ein zweites Wicklungssegment (124), welches einen zweiten Wicklungshebelabstand (L2) zu der Rotationsachse (AA) bereitstellt,
wobei
das erste und das zweite Wicklungssegment (122, 124) eingerichtet sind, um eine Leine (130) bei dem erster bzw. dem zweiten Wicklungshebelabstand zu spulen, und wobei der erste Wicklungshebelabstand (L1) größer ist als der zweite Wicklungshebelabstand (L2), wobei ein erster Abschnitt der Leine (130) um das erste Wicklungssegment (122) gewickelt ist und ein zweiter Abschnitt der Leine (130) um das zweite Wicklungssegment (124) gewickelt ist, **dadurch gekennzeichnet, dass** mindestens eines des ersten und des zweiten Wicklungssegments (122, 124) eine Breite von mindestens zweimal einer Dicke der Leine (130) aufweist und der Wicklungshebelabstand für ein gegebenes Wicklungssegment konstant gehalten wird.

2. Luftdrohnenspulenvorrichtung nach Anspruch 1, wobei das mindestens eine des ersten und des zweiten Wicklungssegments (122, 124), welches eine Breite von mindestens zweimal eine Dicke der Leine (130) aufweist, eine Breite von mindestens fünf- oder zehnmal die Dicke der Leine (130) aufweist.

3. Luftdrohnenspulenvorrichtung nach einem der vorhergehenden Ansprüche, wobei ein Ende der Leine (130) eingerichtet ist, um eine Nutzlast (400) herabzulassen.

4. Luftdrohnenspulenvorrichtung nach Anspruch 3, wobei die Masse der Nutzlast (400) zwischen ungefähr 0,1 kg und 50 kg oder vorzugsweise zwischen ungefähr 0,1 kg und 10 kg oder ganz besonders bevorzugt zwischen 0,1 kg und 5 kg liegt.

5. Luftdrohnenspulenvorrichtung nach einem der vorhergehenden Ansprüche, weiterhin einen Verriegelungsmechanismus (140) umfassend, wobei der Verriegelungsmechanismus (140) in einem verriegelten Zustand den Spulenkörper (120) am Drehen relativ zu dem Luftdrohnenbefestigungsabschnitt (110) hindert und wobei der Verriegelungsmechanismus (140) in einem unverriegelten Zustand dem Spulenkörper (120) ermöglicht, sich relativ zu dem Luftdrohnenbefestigungsabschnitt (110) zu drehen.

6. Luftdrohnenspulenvorrichtung nach einem der vorhergehenden Ansprüche, wobei mindestens einer des Spulenkörpers (120), des ersten Wicklungssegments (122) und des zweiten Wicklungssegments (124) weiterhin einen ringsum vorstehenden Kranz (126) umfasst.

7. Luftdrohnenspulensystem (200), die Luftdrohnenspulenvorrichtung nach einem der vorhergehenden Ansprüche umfassend, wobei das System weiterhin Folgendes umfasst:
ein Bremsmittel (150), welches mit dem Spulenkörper (120) gekoppelt ist, und wobei das Bremsmittel (150) eingerichtet ist, um in einem Bremszustand die Rotation des Spulenkörpers (120) zu bremsen.

8. Luftdrohnenspulensystem nach Anspruch 7, wobei das Bremsmittel (150) weiterhin eingerichtet ist, um in einem Nichtbremszustand dem Spulenkörper (120) zu ermöglichen, sich relativ zu dem Bremsmittel (150) frei zu drehen.

9. Luftdrohne (300), eine Luftdrohnenspulenvorrichtung nach einem der Ansprüche 1 bis 6 umfassend oder ein Luftdrohnenspulensystem nach einem der Ansprüche 7 bis 8 umfassend.

10. Verfahren zum Herablassen einer Leine (130) von einer Luftdrohne (300), wobei die Leine (130) eingerichtet ist, um eine Nutzlast (400) herabzulassen, eine Luftdrohnenspulenvorrichtung umfassend, wobei das Verfahren die folgenden Schritte umfasst:
Abspulen (S1) der Leine (130) von einem ersten Wicklungssegment (122) durch Drehen des ersten Wicklungssegments (122) relativ zu einem Spulenkörper (120) mit einem ersten Drehmoment,
Abspulen (S2) der Leine (130) von einem zweiten Wicklungssegment (124) durch Drehen des zweiten Wicklungssegments (124) relativ zu dem Spulenkörper (120) mit einem ersten Drehmoment,
wobei das erste und das zweite Drehmoment durch eine Zugspannung in der Leine (130) und einen ersten und einen zweiten Wicklungshebelabstand (L1, L2) zu einer Rotationsachse (AA) der Spulenvorrichtung bewirkt wird, **dadurch gekennzeichnet, dass** mindestens eines des ersten und des zweiten Wicklungssegments (122, 124) eine Breite von mindestens zweimal eine Dicke der Leine (130) aufweist und der Wicklungshebelabstand für ein gegebenes Wicklungssegment konstant gehalten wird.

11. Verfahren zum Herablassen einer Nutzlast (400), welche an einer Leine (130) befestigt ist, von einer Luftdrohne (300) nach Anspruch 10, wobei das Verfahren weiterhin den folgenden Schritt umfasst:
Bremsen (S3) der Rotation des Spulenkörpers (120) mit einem Bremsmittel (150) in einem Bremszustand, welches mit dem Spulenkörper (120) gekoppelt ist.

12. Verfahren zum Herablassen einer Nutzlast (400), welche an einer Leine (130) befestigt ist, von einer Luftdrohne (300) nach Anspruch 11, wobei das Verfahren weiterhin die folgenden Folgeschritte umfasst:
nicht Bremsen (S3) der Rotation des Spulenkörpers (120) mit einem Bremsmittel (150) in einem Nichtbremszustand, welches mit dem Spulenkörper (120) gekoppelt ist.

13. Verfahren zum Herablassen einer Nutzlast (400), welche an einer Leine (130) befestigt ist, von einer Luftdrohne (300) nach einem der Ansprüche 10 bis 12, wobei das Verfahren weiterhin Folgendes umfasst, als einen abschließenden Schritt entweder:
Steigern (S5a) der Höhe der Luftdrohne (300), bis die Leine (130) vollständig von dem ersten und/oder dem zweiten Wicklungssegment (122, 124) abspult, oder
Aufspulen (S5b) der Leine mit einem Generator, wobei der Generator als ein Elektromotor fungiert.

## Revendications

1. Dispositif de bobine de drone aérien (100) comprenant :
une partie de fixation de drone aérien (110),
un corps de bobine (120) disposé le long d'un axe de rotation (AA), dans lequel ledit corps de bobine (120) est fixé de manière rotative à ladite partie de fixation de drone aérien (110), dans lequel ledit corps de bobine (120) comprend :
un premier segment de bobinage (122) pour fournir une première distance de levier de bobinage (L1) audit axe de rotation (AA),
un deuxième segment de bobinage (124) fournissant une deuxième distance de levier de bobinage (L2) audit axe de rotation (AA),
dans lequel
lesdits premier et deuxième segments de bobinage (122, 124) sont adaptés pour enrouler une longe (130) respectivement auxdites première et deuxième distances de levier de bobinage, et
dans lequel ladite première distance de levier de bobinage (L1) est supérieure à ladite deuxième distance de levier de bobinage (L2), dans lequel une première partie de ladite longe (130) est enroulée autour dudit premier segment de bobinage (122) et une deuxième partie de ladite longe (130) est enroulée autour dudit deuxième segment de bobinage (124), **caractérisé en ce qu'**au moins un desdits premier et deuxième segments de bobinage (122, 124) a une largeur d'au moins deux fois l'épaisseur de ladite longe (130) et la distance du levier de bobinage est maintenue constante pendant un segment de bobinage donné.

2. Dispositif de bobine de drone aérien selon la revendication 1, dans lequel ledit au moins un desdits premier et deuxième segments de bobinage (122, 124) qui a une largeur d'au moins deux fois une épaisseur de ladite longe (130) a une largeur d'au moins cinq ou dix fois l'épaisseur de ladite longe (130).

3. Dispositif de bobine de drone aérien selon une quelconque des revendications précédentes, dans lequel une extrémité de ladite longe (130) est adaptée pour abaisser une charge utile (400).

4. Dispositif de bobine de drone aérien selon la revendication 3, dans lequel le poids de ladite charge utile (400) est compris entre environ 0,1 kg et 50 kg, ou de préférence entre environ 0,1 kg et 10 kg, ou mieux entre 0,1 kg et 5 kg.

5. Dispositif de bobine de drone aérien selon une quelconque des revendications précédentes, comprenant en outre un mécanisme de verrouillage (140), dans lequel ledit mécanisme de verrouillage (140) dans un état verrouillé empêche ledit corps de bobine (120) de tourner par rapport à ladite partie de fixation de drone aérien (110) et dans lequel ledit mécanisme de verrouillage (140) dans un état déverrouillé permet audit corps de bobine (120) de tourner par rapport à ladite partie de fixation de drone aérien (110).

6. Dispositif de bobine de drone aérien selon une quelconque des revendications précédentes, dans lequel au moins un parmi ledit corps de bobine (120), ledit premier segment de bobinage (122) et ledit deuxième segment de bobinage (124) comprend en outre un rebord dépassant en saillie circonférentiellement (126).

7. Système de bobine de drone aérien (200) comprenant le dispositif de bobine de drone aérien selon une quelconque des revendications précédentes, dans lequel ledit système comprend en outre :
un moyen de freinage (150) couplé audit corps de bobine (120), et dans lequel ledit moyen de freinage (150) est configuré pour, dans un état de freinage, freiner la rotation dudit corps de bobine (120).

8. Système de bobine de drone aérien selon la revendication 7, dans lequel lesdits moyens de freinage (150) sont en outre configurés pour, dans un état non freiné, permettre audit corps de bobine (120) de tourner librement par rapport auxdits moyens de freinage (150).

9. Système de bobine de drone aérien (300) comprenant un dispositif de bobine de drone aérien selon une quelconque des revendications 1 à 6 ou comprenant un système de bobine de drone aérien selon une quelconque des revendications 7 à 8.

10. Procédé pour abaisser une longe (130) depuis un drone aérien (300), dans lequel ladite longe (130) est adaptée pour abaisser une charge utile (400), comprenant un dispositif de bobine de drone aérien, dans lequel ledit procédé comprend les étapes consistant à :
dérouler (S1) ladite longe (130) d'un premier segment de bobinage (122) en faisant tourner ledit premier segment de bobinage (122) avec un premier couple par rapport à un corps de bobine (120),
dérouler (S2) ladite longe (130) d'un deuxième segment de bobinage (124) en faisant tourner ledit deuxième segment de bobinage (124) avec un deuxième couple par rpaport audit corps de bobine (120),
dans lequel lesdits premier et deuxième couples sont provoqués par une tension dans ladite longe (130) et une distance des premier et deuxième leviers de bobinage (L1, L2) à un axe de rotation (AA) du dispositif de bobine, **caractérisé par** au moins un desdits premier et deuxième segments de bobinage (122, 124) a une largeur d'au moins deux fois une épaisseur de ladite longe (130) et la distance du levier de bobinage est maintenue constante pour un segment de bobinage donné.

11. Procédé pour abaisser une charge utile (400) fixée à une longe (130) depuis un drone aérien (300) selon la revendication 10, dans lequel ledit procédé comprend en outre l'étape consistant à:
freiner (S3) la rotation dudit corps de bobine (120) avec des moyens de freinage (150) dans un état de freinage couplé audit corps de bobine (120).

12. Procédé pour abaisser une charge utile (400) fixée à une longe (130) depuis un drone aérien (300) selon la revendication 11, dans lequel ledit procédé comprend en outre les étapes suivantes consistant à :
ne pas freiner (S3) la rotation dudit corps de bobine (120) avec des moyens de freinage (150) dans un état de non-freinage couplé audit corps de bobine (120).

13. Procédé pour abaisser une charge utile (400) fixée à une longe (130) depuis un drone aérien (300) selon une quelconque des revendications 10 à 12, dans lequel ledit procédé comprend en outre, comme étape finale soit :
d'augmenter (S5a) l'altitude dudit drone aérien (300) jusqu'à ce que ladite longe (130) se déroule complètement dudit premier et/ou deuxième segment de bobinage (122, 124), soit
d'enrouler (S5b) ledit câble avec un générateur, dans lequel ledit générateur agit comme un moteur électrique.
